# EUROPEAN PATENT APPLICATION

(11) **EP 3 012 232 A1**
(43) Date of publication of application: **27.04.2016**
(21) Application number: 14189936.9
(22) Date of filing: 22.10.2014
(51) Int. Cl.: C02F 1/467, C02F 1/461

(54) **Electrolysis device for a monitoring and treating system for a swimming pool**

(71) Applicant: Pooltronix SARL, 98000 Monaco (MC)
(72) Inventor: Morrison, Richard, Isle of Wight PO38 2LG (GB)
(74) Representative: Delorme, Nicolas

(57) **Abstract**

The electrolysis device (10), which forms part of a monitoring and treating system, is capable of providing a disinfecting agent for treating the water of a swimming pool.

The electrolysis device (10) comprises a casing (40) having an inlet and an outlet for the flow of water and containing a stack of plates. The stack of plates includes at least two end plates (60, 60a) designed to be electrically connected to a power supply unit, so as to provide the disinfecting agent by electrolysis from the water flowing through the casing. The plates (60) are superimposed with two adjacent plates being spaced apart from each other by a non zero distance.

At least one protecting member (66, 67) is located in the casing and arranged in the vicinity of an edge (68) of at least one plate, in order to prevent deterioration of the plates in use.

## Description

The present invention relates to an electrolysis device for a monitoring and treating system capable of providing a disinfecting agent for treating the water of a swimming pool.

In order to maintain the water in a swimming pool in a safe state, it is usual to introduce a disinfecting agent into the water, to kill bacteria and react with other organic material which may enter the water via the bathers or by the wind for example.

This disinfecting agent can be hypochlorous acid (HOCI), which is a weak acid which dissociates into hydrogen ions and hypochlorite ions. In some swimming pools, in particular private pools, hypochlorous acid is obtained by hydrolysis of gaseous chlorine, said gaseous chlorine being obtained by electrolysis of the swimming pool water in which salt has been added.

Thus, such swimming pools are conventionally equipped with a monitoring and treating system which comprises on or several electrolysis device(s).

Such an electrolysis device conventionally comprises a casing having an inlet and an outlet for the flow of water and containing a stack of plates. The stack of plates includes two end plates which are electrically connected to a power supply unit, so as to provide the disinfecting agent by electrolysis from the water flowing through the casing. The stack of plates generally further comprises several intermediate plates. The plates are superimposed with two adjacent plates being spaced apart from each other.

In use, one end plate forms a cathode while the other end plate forms an anode. Besides, each intermediate plate is bipolar, with the faces of the plates which face towards the electrically more-positive end plate forming cathodes, and the faces of the plates which face the towards the electrically more-negative end plate forming anodes.

An electric field is therefore generated in the casing. In the central regions of the plates, the electric field lines are substantially orthogonal to the main faces of the plates and the electric field is uniform. However, the electric field is nonuniform towards the plates edges. More precisely, the electric field strength is higher in the vicinity of the plates edges. This edge effect results in higher stresses in the vicinity of the plates edges, which leads to a quicker deterioration of said edges as compared to the rest of the plates.

As a result, the plates of the electrolysis device have to be replaced when the edges are too damaged, even though the central regions of the plates are still in an acceptable condition to continue to be used.

It is an object of the present invention to provide an improved electrolysis cell which can overcome the drawbacks of the prior art.

According to a first aspect, the invention concerns an electrolysis device for a monitoring and treating system capable of providing a disinfecting agent for treating the water of a swimming pool, the electrolysis device comprising a casing having an inlet and an outlet for the flow of water and containing a stack of plates, the stack of plates including at least two end plates designed to be electrically connected to a power supply unit, so as to provide the disinfecting agent by electrolysis from the water flowing through the casing, the plates being superimposed with two adjacent plates being spaced apart from each other by a non zero distance (d). The electrolysis device according to the invention further comprises at least one protecting member located in the casing and arranged in the vicinity of an edge of at least one plate, said protecting member being designed and positioned so as to form an obstacle for the electric field lines in use.

Owing to the protecting member, the electric field lines usual path is impeded, and the electric field is thus modified in the vicinity of said plate edge. As a result, the electric field is less strong in the vicinity of said plate edge as compared to conventional electrolysis devices and, ultimately, said plate edge is subjected to a lesser stress. The invention therefore makes it possible to protect said plate edge from premature deterioration, and increases the electrolysis device service life.

The terms "in the vicinity" indicate that the protecting member can face said edge and/or can extend along an end area of a plate main face - or of each of the two plate main faces-adjacent said edge.

Besides, it has to be understood that the electrolysis does not necessarily provide the disinfecting agent directly, but can provide it indirectly, by causing the formation of a compound which will undergo further reactions to ultimately provide the disinfecting agent. The compound directly provided by electrolysis can thus be a precursor of the disinfecting agent.

In an embodiment, the protecting member extends substantially along the whole length of said edge.

The protecting member can have a portion which faces an end face of said edge and a portion which faces an area of a plate main face adjacent said end face and facing another plate of the stack of plates. In other words, the protective member can be U shaped and arranged around the plate edge, with the base portion of the U facing the end face, and the wings of the U located on both sides of the plate.

The electrolysis device can comprise two protecting members located in the casing and arranged in the vicinity of respective opposite edges of at least one plate.

The plates can be identical. The plates have a substantially rectangular shape. In an embodiment, the plates have the shape of substantially identical rectangles, the plates being superimposed such that the corresponding plates end faces are substantially coplanar, the stack of plates substantially forming a parallelepiped.

According to an embodiment, the casing has an axis which is also the inlet axis and the outlet axis. Furthermore, the plates are positioned such that their longitudinal edges are substantially parallel to said axis, the protecting member(s) being arranged in the vicinity of at least one longitudinal edge of at least one plate.

According to an embodiment, the casing further comprises at least one support for the plates, each support having a series of substantially parallel grooves, each groove receiving an edge of one plate, the rib formed between two adjacent grooves forming at least part of the protective member.

The electrolysis device can further comprise two panels arranged substantially parallel to the plates, on both sides of the stack of plates, with the support further comprising two slots for receiving an edge of each panel. With this arrangement, two panels and two supports form a rectangular housing around the stack of plates.

In an embodiment, the depth of the groove receiving a plate edge is greater than 1 cm. This ensures appropriate protection of the plates edges.

The stack of plates can include at least one intermediate plate located between the end plates, the stack of plates including for example 14 plates (i.e. two end plates and 12 intermediate plates).

According to an embodiment, the distance (d) between two adjacent plates ranges from 1,3 to 1,7 mm, preferably from 1,4 to 1,5 mm. Having a small space between plates creates a confined space and therefore a high concentration of the compound produced by electrolysis. In case said compound is gaseous chlorine, this high chlorine concentration makes it possible to efficiently remove chloramines from the water flowing in the casing from the swimming pool.

The electrolysis device can further comprise an inlet pipe connected to the casing inlet, a diffuser being arranged in the inlet pipe to create turbulence in the water flow. Owing to this feature, the water travelling through the casing is better diffused inside the casing, which helps removing the compound produced by electrolysis from the plates.

For example, the electrolysis device can be designed to provide gaseous chlorine as a precursor of a disinfecting agent by the electrolysis of water including salt flowing through the casing.

According to an embodiment, the electrolysis device can be designed to provide copper and/ or silver ions, preferably both copper and silver ions.

According to a second aspect, the invention relates to a monitoring and treating system capable of providing a disinfecting agent for treating the water of a swimming pool, said monitoring and treating system comprising at least one electrolysis device as previously described.

These and other features and advantages will become apparent upon reading the following description in view of the drawing attached hereto representing, as a non-limiting example, an embodiment of an electrolysis device according to the invention.

The following detailed description of an embodiment of the invention is better understood when read in conjunction with the appended drawings, it being however understood that the invention is not limited to the specific embodiment disclosed.
Figure 1 is a schematic view of a swimming pool and of a monitoring and treating system including electrolysis devices according to an embodiment of the invention;
Figure 2 is a perspective view of an electrolysis device of figure 1;
Figure 3 is an exploded view of the electrolysis device of figure 2;
Figure 4 is a sectional view of the electrolysis device, along a longitudinal median plane of said device, along line AA of figure 5;
Figure 5 is a sectional view of the electrolysis device, along the transverse median plane of said device, along line BB of figure 4;
Figure 6 is an enlarged view of detail C of figure 5.

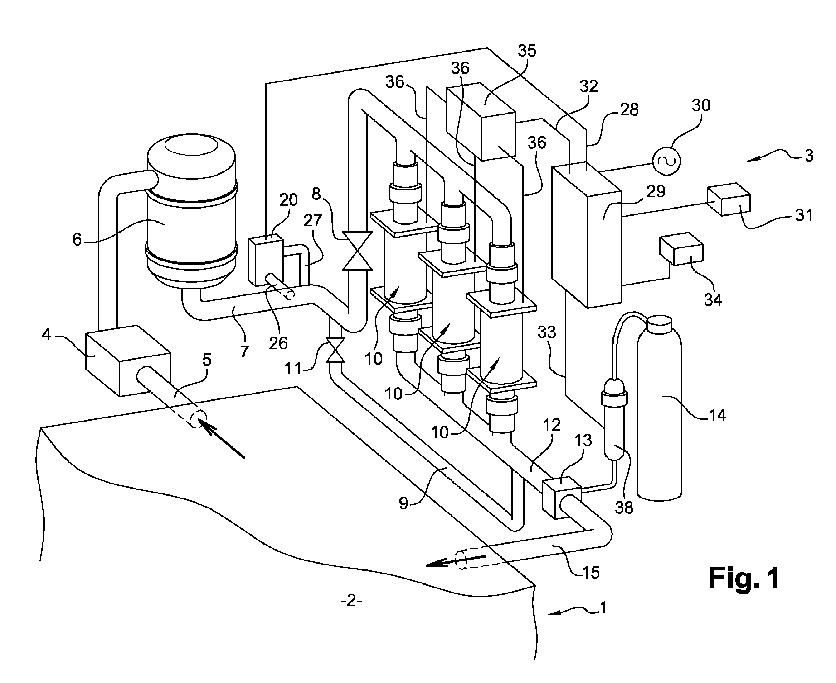

Referring to Figure 1 there is shown a swimming pool 1 containing water 2 which is kept in safe and attractive condition by a monitoring and treating system 3. In the following description, the compound used to treat the swimming pool water is gaseous chlorine.

When a swimming pool is first filled with tap water, the water is clear and safe to swim in. However, unwanted contaminants can then enter the water.

These contaminants include microorganisms introduced by bathers, for example. As said microorganisms quickly multiply in the warm water, they have to be treated to prevent subsequent swimmers from becoming sick. Chlorine is conventionally used to kill microorganisms.

These contaminants further include chloramines which are chemical compounds resulting from the reaction of free chlorine with organic substances. Chloramines are undesirable and therefore needs to be removed from the swimming pool water. Indeed, compared to free chlorine, chloramines are both less effective as a sanitizer and, if not managed correctly, more irritating to the eyes of swimmers. Chloramines are also responsible for the reported "chlorine" smell of swimming pools.

More precisely, chlorine introduced in the water is rapidly hydrolysed to hypochlorous acid (HOCI), which is a strong germicidal compound:

Cl₂ + H₂0 → HOCl + Cl⁻ + H⁺.

Hypochlorous acid then dissociates into hydrogen ions and hypochlorite ions as follows: HOCl → H⁺ + OCl⁻.

However, chlorine also reacts with ammonia that is continuously added to the pool water through decomposition of urea in nitrogenous products (urine, sweat, etc.) introduced by the bathers. The product of this reaction is chloramines (NH₂Cl, NHCl₂, NCl₃). In addition to the above-mentioned drawbacks, the chloramines are further undesirable because they decrease the amount of free chlorine available for water treatment.

"Free chlorine" means chlorine which can participate in an oxidation reaction and maintain a swimming pool in a safe state. It is the sum of the amounts of HOCI and OCl⁻, and does not include chloramines. Chlorine in the form of chloramines is referred to as"combined chlorine".

The monitoring and treating system 3 comprises a circulating pump 4 which pumps the water 2 through pipe 5 into a filtration unit 6 which removes leaves and solid particles. The filtered water leaves the filtration unit 6 through a pipe 7 and a valve 8 and passes through one of several electrolysis devices 10 before being introduced into pipe 12. In the illustrated embodiment, three electrolysis devices 10 are arranged in parallel between pipe 7 and pipe 12, but this shall not be considered as limitative. A bypass line 9 having a valve 11 is provided so that water can be circulated whilst maintenance is carried out on the electrolysis devices 10.

Gaseous carbon dioxide from a cylinder 14 can be introduced into the water flowing in pipe 12 downstream from the electrolysis devices 10, in order to adjust the water pH. This can be achieved by a venturi 13 provided in pipe 12.

Finally, the chlorinated and pH adjusted water is returned through pipe 15 into the swimming pool 1.

The amount of chlorine and carbon dioxide which are introduced into the water 2 is requested by a control system which comprises a sensor block 20. In use, a small flow of water 2 is passed through the sensor block 20 via supply tube 26 and returned via return tube 27. The sensor block 20 can typically contain a pH cell, one or more sensors to determine the global concentration of chlorine and/or the free chlorine concentration, and a temperature sensor.

The signals from the sensor block 20 are sent along line 28, such as a multistrand cable, to a control unit 29. The control unit 29 is connected to a power supply 30, a user interface 31 and a device 34 for Internet access.

Although the sensor block 20 is shown as being distinct from the control unit 29, in an implementation the sensor block 20 can be integrated in the same box as the control unit 29.

A chlorine control line 32 connects the control unit 29 to a chlorine control unit 35 that is connected to the electrolysis devices 10 via electric cables 36. The chlorine control unit 35 is used to apply a DC potential across the electrolysis devices 10.

A carbon dioxide control line 33 connects the control unit 29 to a flow cell 38 that is connected to the cylinder 14 containing gaseous carbon dioxide.

The operation of the monitoring and treating system 3 will now be described. To facilitate understanding it will be assumed that the swimming pool 1 has been cleaned and newly filled with fresh tap water which will be free of chloramines.

As the swimming pool is filled the water 2 is dosed with table salt to a concentration of about 3g/l for example. The salt is used in the production of chlorine in the electrolysis devices 10 as will hereinafter be described.

The circulatory pump 4 is activated and the water flows through the filtration unit 6, the electrolysis devices 10, the venturi 13 and returned to the swimming pool 1.

Generally, the parameters of the sample of water passing through the block 20 can be: pH ≈ 7.4; free chlorine ≈ 0.1 ppm; chloramines = 0; temperature ≈ 24.7°C.

The optimum pH can be 7.3, which is both comfortable for the bathers and efficient for the chlorine disinfecting action. This optimum pH is preset in the control unit 29. As regards the free chlorine level, it depends on the use of the pool (public or domestic) and on local regulations. Accordingly, the desired chlorine level (2 ppm for example) is entered into the set point input 31.

Dealing firstly with the chlorine, the control unit 29 notes that chlorine is required and sends a signal to the chlorine control unit 35 which applies a DC potential across the electrolysis devices 10. As will be described later, salted water is electrolysed in each electrolysis device 10 to form chlorine which enters the water. Moreover, there might be a need to produce more chlorine in case the chloramines level is too high. Indeed, chloramine can be removed from water by treatment with superchlorination (such as 5 ppm or more of free chlorine for example) while maintaining a pH of about 7, whereby hypochlorous acid from the free chlorine strips the ammonia from the chloramine.

Once the water has been properly chlorinated, carbon dioxide is injected into the water to adjust its pH to the desired value of 7.3 before the water is returned to the swimming pool 1.

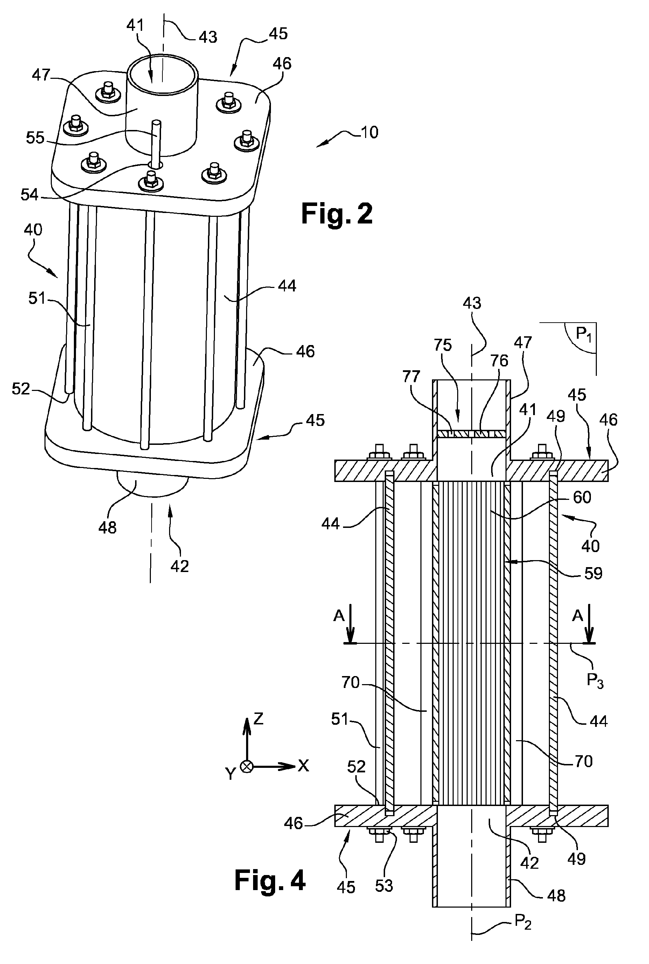

The electrolysis device 10 will now be described with reference to figures 2 to 6.

The electrolysis device 10 comprises a casing 40 having an inlet 41 and an outlet 42 for the flow of water. In the illustrated embodiment, the casing 40 has an axis 43 and comprises a peripheral wall 44 which is substantially cylindrical as well as end covers 45. For example, the peripheral wall diameter is about 17 cm. The peripheral wall 44 and/or covers 45 can be made of uPVC (unplasticized polyvinyl chloride).

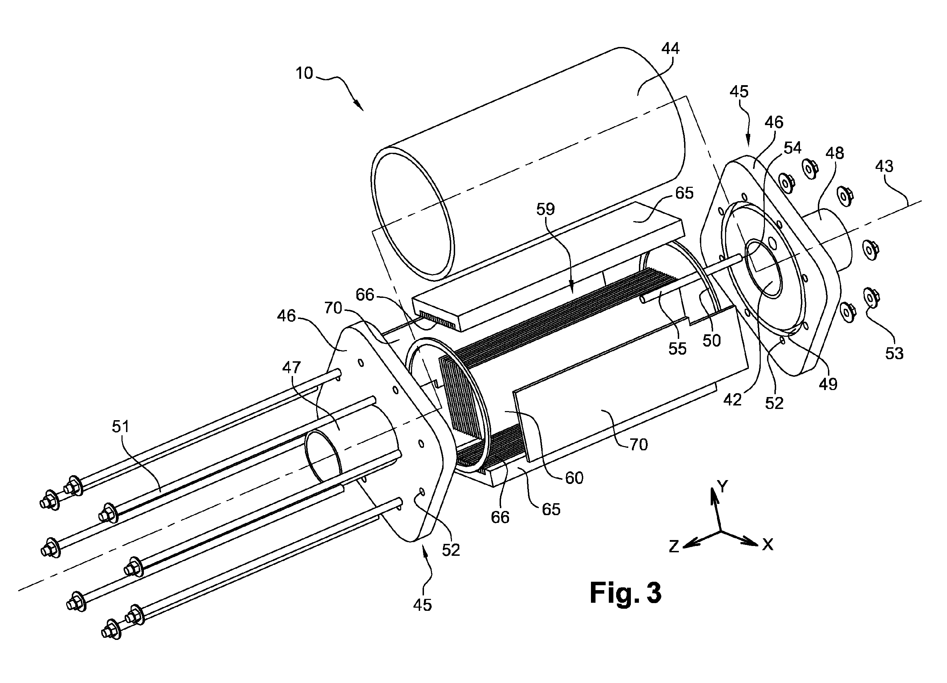

As shown in figure 3, longitudinal direction Z is defined as the direction of the casing axis 43. Directions X and Y are directions which are both orthogonal to Z and orthogonal to each other. The term "transverse" is used for elements which are substantially orthogonal to direction Z.

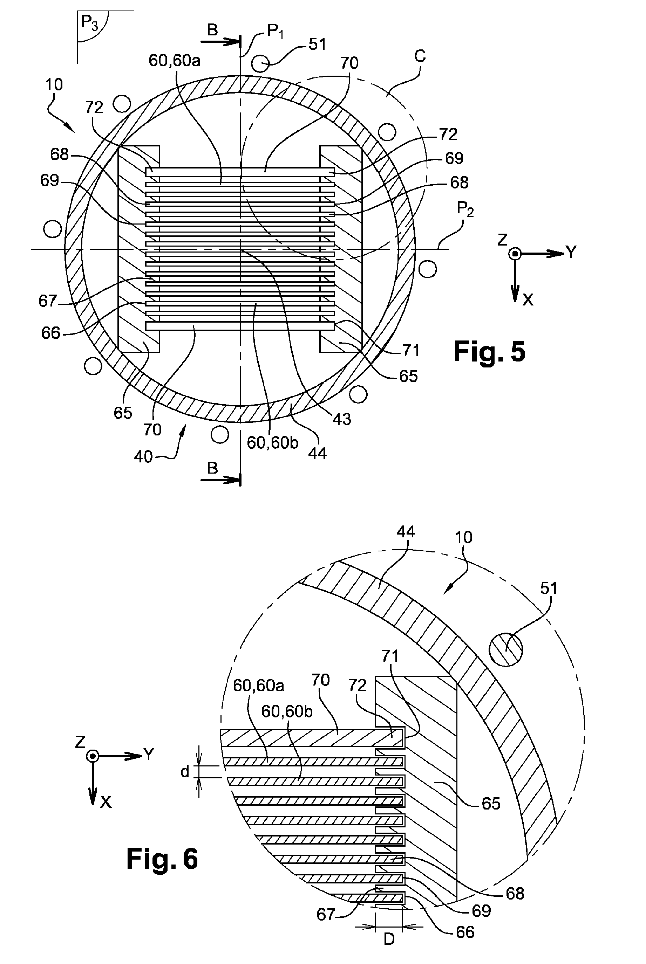

In the illustrated embodiment, the electrolysis device 10 has a first longitudinal plane of symmetry P1 parallel to (X,Z), a second longitudinal plane of symmetry P2 parallel to (Y,Z), and a transverse median plane of symmetry P3 parallel to (X,Y), as can be seen in figures 4 and 5.

The covers 45 can be substantially identical. One cover 45 comprises a transverse wall 46 which can substantially have the shape of a square, and which comprises a central hole forming the inlet 41, respectively the outlet 42. Inlet 41 and outlet 42 can be substantially circular and their axis can be axis 43. An inlet pipe 47 is connected to the casing inlet 41, and an outlet pipe 48 is connected to the casing outlet 42. Said pipes 47, 48 can be plastic welded to the wall 46 and can have a diameter of about 6.35 mm (2.5 in).

The cover 45 further comprises a substantially annular channel 49 for receiving the corresponding longitudinal end of the peripheral wall 44, with an annular seal 50 being interposed between the peripheral wall 44 and the cover 45. The covers 45 can be fastened to each other by means of bolts 51 passing through holes 52 arranged in the covers and tightened by nuts 53. The casing 40 can thus be tightly closed under a 5 bar pressure.

Each cover 45 further includes a hole 54 receiving an electrode 55 which is secured in place by a threaded seal and which is connected to the chlorine control unit 35 and provides the DC potential.

The casing 40 contains a stack 59 of plates 60. The plates 60, which are substantially identical, have the shape of rectangles arranged parallel to P2. The plates dimensions can be 300 x 90 x 1 mm. The plates 60 can be made of titanium with a ruffinium oxide coating, or with a ruthenium iridium oxide coating.

The plates 60 are superimposed such that their corresponding end faces are substantially coplanar, the stack of plates 59 substantially forming a parallelepiped as shown in figure 3. The longer edge 68 of each plate 60 is arranged substantially longitudinally and comprises an end face 69 substantially parallel to (X,Z).

Moreover, two adjacent plates 60 are spaced apart from each other by a non zero distance d, which can range from 1,3 to 1,7 mm, preferably from 1,4 to 1,5 mm.

The stack of plates 59 includes two end plates 60a which are electrically connected to the chlorine control unit 35. These end plates 60a form electrodes - i.e. one anode and one cathode. Furthermore, the stack of plates 59 includes intermediate plates 60b located between the end plates 60a, each intermediate plate 60b being bipolar - i.e. with one face forming an anode and the other face forming a cathode. In the illustrated embodiment, the stack of plates 59 comprises two end plates 60a and twelve intermediate plates 60b, making a total of fourteen plates 60.

Periodically, in use, the polarity of the chlorine control unit 35 is reversed to prevent calcification of the plates 60 of the electrolysis devices 10.

The casing 40 further comprises two supports 65 for the plates 60, to secure them in the casing 40 in an appropriate and precise manner. The supports 65, which are substantially identical, have the shape of flat parallelepipeds extending substantially parallel to (X,Z), i.e. perpendicular to the plates 60. The supports 65 substantially have the same longitudinal dimension as the peripheral wall 44. The supports 65 are located on both sides of the stack of plates 59.

On its face turned towards axis 43, i.e. towards the plates 60, each support 65 comprises a series of substantially parallel grooves 66. Each groove 66 extends substantially along Z, substantially along the whole length of the support 65. Each of the plates 60 have one longitudinal edge 68 received in the groove 66 of one support 65, and the other longitudinal edge 68 received in the groove 66 of the opposite support 65. As a result, a rib 67 is formed between two adjacent grooves 66, said rib 67 being located between the edges 68 of two adjacent plates 60. The end face 69 of one plate edge 68 faces the bottom of the groove 66.

The depth D - along direction Y - of the groove receiving a plate edge is greater than 1 cm.

The electrolysis device 10 further comprises two panels 70 which are arranged substantially parallel to the plates 60, on both sides of the stack of plates 59. Panels 70 can be made of made of uPVC (unplasticized polyvinyl chloride). Each support 65 comprises two slots 71 for receiving an edge of each panel 70. More precisely, each slot 71 extends substantially along Z, substantially along the whole length of the support 65. Each of the panels 70 have one longitudinal edge 72 received in the slot 71 of one support 65, and the other longitudinal edge 72 received in the slot 71 of the opposite support 65.

Thus, as shown in figures 3 and 5, the two panels 70 and the two supports 65 form a rectangular housing around the stack of plates 59, said housing maintaining the plates 60 and being tightly secured between the end covers 45.

Besides, as shown in figure 4, a diffuser 75 can be arranged in the inlet pipe 47, to create turbulence in the water flow. In the illustrated embodiment, the diffuser 75 comprises a substantially transverse wall 76 including holes 77. For example, the diffuser can be a drilled plastic plate including a series of holes having a diameter of about 0.6 mm (1/4 in). This provides the turbulence necessary to take the hypochlorous acid from the surfaces of the plates 60.

The electrolysis devices 10 are thus designed to provide gaseous chlorine as a precursor of a disinfecting agent by the electrolysis of water including salt flowing through the casing 40. In practice, the electrolysis devices 10 can be designed to produce about 450-460 g of pure chlorine per hour at maximum power (40 V).

Because the plates 60 have their longitudinal edges 68 embedded into the grooves 66, at a sufficient depth D (namely more than 1 cm), any current transfer between the two end plates 60a is prevented, i.e. the transfer of power short-circuiting is prevented. As a result, deterioration of the plates 60 is prevented. More precisely, the rib 67 between two adjacent grooves 66, as well as the grooves 66, act as protective members for the longitudinal edges 68 of the plates 60.

Moreover, having the plates 60 spaced apart by a fairly small distance d leads to a high concentration of free chlorine produced on the plates 60. In the confined space between two adjacent plates 60, the amount of free available chlorine can reach almost 100%. The electrolysis devices 10 therefore operate in a shock-dosing mode: the chlorine level is locally quickly increased to reach a high value, which results in the chloramines being broken down very effectively.

The invention is of course not limited to the embodiments described above as examples, but encompasses all technical equivalents and alternatives of the means described as well as combinations thereof.

Although the invention has been described for an electrolysis device designed to provide gaseous chlorine, it is not limited to this application and can also be used to protect the electrodes of other types of electrolysis devices for swimming pools, such as electrolysis devices capable of producing silver or copper ions.

## Claims

1. An electrolysis device for a monitoring and treating system (3) capable of providing a disinfecting agent for treating the water (2) of a swimming pool (1), the electrolysis device (10) comprising a casing (40) having an inlet (41) and an outlet (42) for the flow of water and containing a stack of plates (59), the stack of plates (59) including at least two end plates (60, 60a) designed to be electrically connected to a power supply unit (35), so as to provide the disinfecting agent by electrolysis from the water flowing through the casing (40), the plates (60) being superimposed with two adjacent plates (60) being spaced apart from each other by a non zero distance (d), **characterized in that** it further comprises at least one protecting member (66, 67) located in the casing (40) and arranged in the vicinity of an edge (68) of at least one plate (60), said protecting member (66, 67) being designed and positioned so as to form an obstacle for the electric field lines in use.

2. The electrolysis device according to claim 1, **characterized in that** the protecting member (66, 67) extends substantially along the whole length of said edge (68).

3. The electrolysis device according to claim 1 or 2, **characterized in that** the protecting member (66, 67) has a portion which faces an end face (69) of said edge (68) and a portion which faces an area of a plate main face adjacent said end face (69) and facing another plate (60) of the stack of plates (59).

4. The electrolysis device according to any one of claims 1 to 3, **characterized in that** it comprises two protecting members located in the casing and arranged in the vicinity of respective opposite edges (68) of at least one plate (60).

5. The electrolysis device according to any one of claims 1 to 4, **characterized in that** the plates (60) have the shape of substantially identical rectangles, the plates (60) being superimposed such that the corresponding plates end faces (69) are substantially coplanar, the stack of plates (59) substantially forming a parallelepiped.

6. The electrolysis device according to claim 5, **characterized in that** the casing (40) has an axis (43) which is also the inlet axis and the outlet axis, and **in that** the plates (60) are positioned such that their longitudinal edges (68) are substantially parallel to said axis (43), the protecting member(s) (66, 67) being arranged in the vicinity of at least one longitudinal edge (68) of at least one plate (60).

7. The electrolysis device according to any one of claims 1 to 6, **characterized in that** the casing (40) further comprises at least one support (65) for the plates (60), each support (65) having a series of substantially parallel grooves (66), each groove (66) receiving an edge (68) of one plate (60), the rib (67) formed between two adjacent grooves (66) forming at least part of the protective member.

8. The electrolysis device according to claim 7, **characterized in that** it further comprises two panels (70) arranged substantially parallel to the plates (60), on both sides of the stack of plates (59), and **in that** the support (65) further comprises two slots (71) for receiving an edge (72) of each panel (70).

9. The electrolysis device according to claim 7 or 8, **characterized in that** the depth (D) of the groove (66) receiving a plate edge (68) is greater than 1 cm.

10. The electrolysis device according to any one of claims 1 to 9, **characterized in that** the stack of plates (59) includes at least one intermediate plate (60, 60b) located between the end plates (60, 60a), the stack of plates (59) including for example 14 plates (60).

11. The electrolysis device according to any one of claims 1 to 10, **characterized in that** the distance (d) between two adjacent plates (60) ranges from 1,3 to 1,7 mm, preferably from 1,4 to 1,5 mm.

12. The electrolysis device according to any one of claims 1 to 11, **characterized in that** it comprises an inlet pipe (47) connected to the casing inlet (41), a diffuser (75) being arranged in the inlet pipe (47) to create turbulence in the water flow.

13. The electrolysis device according to any one of claims 1 to 12, **characterized in that** it is designed to provide gaseous chlorine as a precursor of a disinfecting agent by the electrolysis of water (2) including salt flowing through the casing (40).

14. A monitoring and treating system capable of providing a disinfecting agent for treating the water (2) of a swimming pool (1), **characterized in that** it comprises at least one electrolysis device (10) according to the preceding claims.
